# EUROPEAN PATENT APPLICATION

(11) **EP 4 398 366 A2**
(43) Date of publication of application: **10.07.2024**
(21) Application number: 23216487.1
(22) Date of filing: 13.12.2023
(51) Int. Cl.: H01M 10/0568, H01M 10/0569

(54) **LITHIUM SECONDARY BATTERY**

(30) Priority: 15.12.2022 KR 20220175696
(71) Applicant: SK On Co., Ltd., Seoul 03161 (KR)
(72) Inventor: PARK, Jong Hun, 34124 Daejeon (KR); CHO, In Haeng, 34124 Daejeon (KR); NAM, Hai Sol, 34124 Daejeon (KR)
(74) Representative: Stolmár & Partner Patentanwälte PartG mbB

(57) **Abstract**

A lithium secondary battery includes a cathode including a cathode current collector and a cathode active material disposed on at least one surface of the cathode current collector, the cathode active material including first cathode active material particles having a shape of a single particle, an anode facing the cathode, and a non-aqueous electrolyte solution having a lithium salt and a non-aqueous organic solvent that includes a difluoro-based organic solvent. A content of the difluoro-based organic solvent is in a range from 2 vol% to 10 vol% based on a total volume of the non-aqueous organic solvent

## Description

### BACKGROUND

### 1. Field

The present invention relates to a lithium secondary battery.

### 2. Description of the Related Art

A secondary battery which can be charged and discharged repeatedly has been widely employed as a power source of a mobile electronic device such as a camcorder, a mobile phone, a laptop computer. Recently, a battery pack including the secondary battery is being developed and applied as a power source of an eco-friendly automobile such as a hybrid vehicle.

A lithium secondary battery is highlighted and developed among various types of secondary batteries due to high operational voltage and energy density per unit weight, a high charging rate, a compact dimension, etc.

For example, the lithium secondary battery may include an electrode assembly including a cathode, an anode and a separation layer, and an electrolyte solution immersing the electrode assembly. The lithium secondary battery may further include an outer case having, e.g., a pouch shape for accommodating the electrode assembly and the electrolyte solution.

As an application range of the lithium secondary batteries is expanded, enhanced life-span, and higher capacity and operational stability are required. Accordingly, a lithium secondary battery that provides uniform power and capacity even during repeated charging and discharging is preferable.

However, power and capacity may be decreased due to surface damages of a nickel-based lithium metal oxide used as the cathode active material during the repeated charging and discharging, and side reactions between the nickel-based lithium metal oxide and the electrolyte may occur.

### SUMMARY

According to an aspect of the present invention, there is provided a lithium secondary battery providing improved operational stability and electrical property.

A lithium secondary battery of the present disclosure includes a cathode including a cathode current collector and a cathode active material disposed on at least one surface of the cathode current collector and including first cathode active material particles that have a shape of a single particle, an anode facing the cathode, and a non-aqueous electrolyte solution containing a lithium salt and a non-aqueous organic solvent that includes a difluoro-based organic solvent. A content of the difluoro-based organic solvent is in a range from 2 vol% to 10 vol% based on a total volume of the non-aqueous organic solvent.

In some embodiments, the content of the difluoro-based organic solvent may be in a range from 3 vol% to 7 vol% based on the total volume of the non-aqueous organic solvent.

In some embodiments, the cathode active material may further include second cathode active material particles having a shape of a secondary particle.

In some embodiments, a content of the first cathode active material particles may be in a range from 10 wt% to 40 wt% based on a total weight of the cathode active material.

In some embodiments, the difluoro-based organic solvent may be represented by Chemical Formula 2 below.

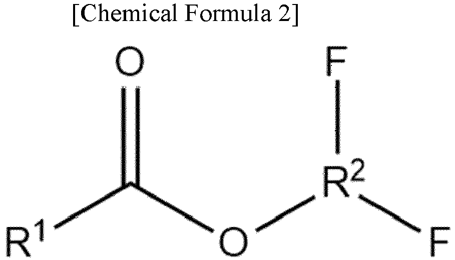

In Chemical Formula 2, R¹ is a hydrocarbon group containing a C₁-C₆ alkyl group or a C₆-C₁₂ aryl group, and R² is a hydrocarbon group containing a C₁-C₆ alkyl group or a C₂-C₆ alkenyl group.

In some embodiments, the difluoro-based organic solvent may include 2,2-difluoroethyl acetate.

In some embodiments, the non-aqueous organic solvent may further include a monofluoro-based organic solvent, and a content of the monofluoro-based organic solvent may be in a range from 2 vol% to 6 vol% based on the total volume of the non-aqueous organic solvent.

In some embodiments, the monofluoro-based organic solvent may be represented by Chemical Formula 3 below.

[Chemical Formula 3] F-R³

In Chemical Formula 3, R³ is a hydrocarbon group containing a C₁-C₆ alkyl group, a C₆-C₁₂ aryl group, a C₅-C₁₂ cycloalkyl group, a C₅-C₁₂ cycloalkenyl group, a 5 to 7-membered heterocycloalkyl group or a 5 to 7-membered heterocycloalkenyl group.

In some embodiments, the non-aqueous organic solvent may further include a propionate-based organic solvent including at least one selected from the group consisting of methyl propionate (MP), ethyl propionate (EP) and propyl propionate (PP).

In some embodiments, a content of the propionate-based organic solvent may be in a range from 10 vol% to 30 vol% based on the total volume of the non-aqueous organic solvent.

In some embodiments, the non-aqueous organic solvent may further include a non-fluoro solvent including at least one selected from the group consisting of a carbonate-based solvent, an ester-based solvent, an ether-based solvent, a ketone-based solvent, an alcohol-based solvent and an aprotic solvent.

In some embodiments, a content of the non-fluoro solvent may be in a range from 60 vol% to 80 vol% based on the total volume of the non-aqueous organic solvent.

In some embodiments, the non-aqueous electrolyte solution may further include an additive containing a boron-based compound, and a content of the additive may be in a range from 0.1 wt% to 1.0 wt% based on a total weight of the non-aqueous electrolyte solution.

In some embodiments, the boron-based compound may include at least one selected from the group consisting of lithium bis(oxalate) borate (LiBOB), tris(trimethylsilyl) borate (TMSB) and lithium difluoro(oxalato) borate (LiFOB).

In some embodiments, the non-aqueous electrolyte may further include an auxiliary additive including at least one selected from the group consisting of an alkyl sultone-based compound and an alkenyl sultone-based compound, and a content of the auxiliary additive may be in a range from 0.8 wt% to 1.5 wt% based on a total weight of the non-aqueous electrolyte solution.

In some embodiments, the lithium salt may include at least one of lithium tetrafluoroborate (LiBF₄), lithium hexafluorophosphate (LiPF₆) and lithium difluorophosphate (LiPO₂F₂).

In one aspect of the present disclosure, a lithium secondary battery includes a cathode including a cathode current collector and a cathode active material disposed on at least one surface of the cathode current collector, an anode facing the cathode, and a non-aqueous electrolyte. The cathode active material includes first cathode active material particles comprising less than 10 lithium-transition metal oxide particles in contact with or attached to each other, and second cathode active material particles comprising more than 10 of the lithium-transition metal oxide particles aggregated together.

The lithium secondary battery of the present disclosure includes the cathode active material including first cathode active material particles having a single particle shape and the non-aqueous electrolyte solution including a difluoro-based organic solvent in a desired amount range.

The particles having a single particle shape are included in the cathode active material, so that cracks of the cathode active material may be reduced, and a Brunauer, Emmett and Teller (BET) specific surface area that may react with the electrolyte solution may be reduced. Accordingly, the life-span properties of the secondary battery and a capacity retention during repeated charging and discharging may be improved.

A content of the difluoro organic solvent is in a range from 2 vol% to 10 vol% based on a total volume of the non-aqueous organic solvent. Within this range, a content of fluorine (F) in the non-aqueous electrolyte may be sufficiently increased to improve an oxidation resistance of the lithium secondary battery, and a capacity reduction due to an excessive fluorine content may be prevented. Accordingly, high-temperature storage properties and capacity retention of the lithium secondary battery may be improved.

The cathode active material including the first cathode active material particles having the shape of the single particle and the non-aqueous electrolyte solution including the difluoro organic solvent may be used together so that a side reaction between the cathode active material and the non-aqueous electrolyte may be further suppressed. Thus, the life-span and high-temperature storage properties may be improved.

### BRIEF DESCRIPTION OF THE DRAWINGS

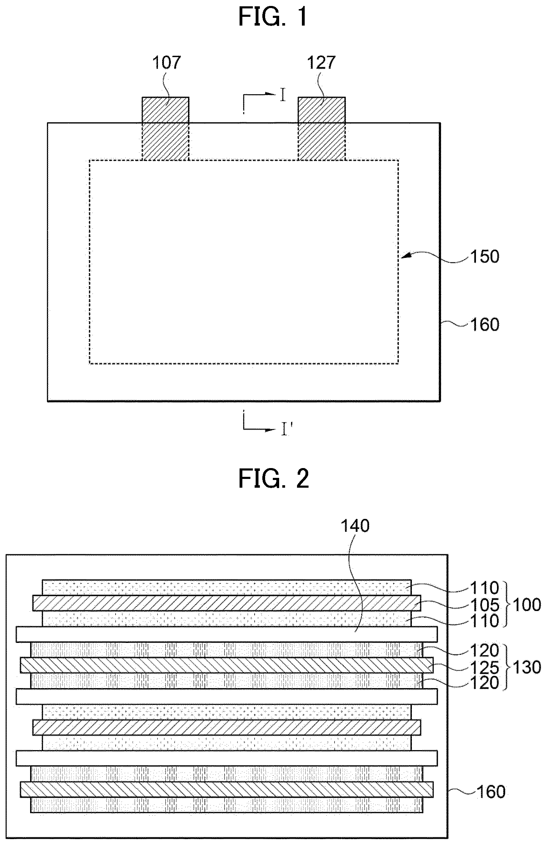

FIGS. 1 and 2 are a schematic plan view and a schematic cross-sectional view, respectively, illustrating a lithium secondary battery in accordance with exemplary embodiments.

### DETAILED DESCRIPTION OF THE EMBODIMENTS

According to the disclosure of the present application, a lithium secondary battery including a cathode, an anode and a non-aqueous electrolyte solution is provided.

Hereinafter, embodiments of the present disclosure will be described in detail. However, the disclosed embodiments herein are only exemplary and the present disclosure is not limited to specific embodiments.

FIGS. 1 and 2 are a schematic plan view and a schematic cross-sectional view, respectively, illustrating a lithium secondary battery in accordance with exemplary embodiments. FIG. 2 is a cross-sectional view taken along a line I-I' of FIG. 1.

Referring to FIGS. 1 and 2, a lithium secondary battery includes a cathode 100 and an anode 130 facing the cathode 100.

The cathode 100 includes a cathode active material including first cathode active material particles having a shape of a single particle.

In example embodiments, the cathode 100 includes a cathode current collector 105 and a cathode active material layer 110 disposed on at least one surface of the cathode current collector. The cathode active material layer 110 includes a cathode active material including the first cathode active material particles having a shape of a single particle.

The term "single particle" may be used herein to exclude a secondary particle substantially formed into one particle by aggregation of a plurality of primary particles (e.g., more than 10). For example, the first cathode active material particles may substantially consist of particles having the shape of the single particle, and the secondary particle including primary particles (e.g., more than 10, 20 or more, 30 or more, 40 or more, 50 or more) aggregated therein may be excluded.

The term "single particle" used herein does not exclude single particles in a monolithic form of, for example, 2 to 10 particles are in contact with or attached to each other.

In some embodiments, the first cathode active material particle may include a structure in which a plurality of primary particles are integrally merged into a substantially single particle form.

For example, the first cathode active material particle may have a granular or spherical single particle shape.

In cathode active material particles having a secondary particle shape (e.g., an aggregate of 10 or more primary particles), micro-cracks may be easily formed at an inside of the secondary particle during charging and discharging of the battery, and a side reaction between an electrolyte and the cathode active material may be accelerated. Accordingly, a gas may be generated from the inside of the battery. As a result, the life-span properties of the secondary battery may be deteriorated during repeated charging and discharging

According to embodiments of the present disclosure, the cathode active material includes the first cathode active material particle having the single particle form, so that cracks of the particles and a Brunauer, Emmett and Teller (BET) specific surface area reacting with the electrolyte may be reduced. Accordingly, the life-span properties of the secondary battery and a capacity retention rate during repeated charging and discharging may be improved.

In some embodiments, the cathode active material may further include second cathode active material particles having a shape of a secondary particle. Accordingly, initial capacity properties of the lithium secondary battery may be improved.

In example embodiments, a content of the first cathode active material particles may be in a range from 10 weight percent (wt%) to 40 wt% based on a total weight of the cathode active material. For example, the content of the first cathode active material particles may be 10 wt% or more, 15 wt% or more, 20 wt% or more, or 25 wt% or more, and may be 40 wt% or less, 35 wt% or less, or 30 wt% or less.

Within this range, mechanical and chemical stability of the secondary battery may be improved while preventing excessive reduction of the particle surface area. Accordingly, the life-span properties of the lithium secondary battery may be improved while maintaining or improving capacity properties.

In example embodiments, each of the first cathode active material particle and the second cathode active material particle may include a lithium-transition metal oxide particle.

For example, the lithium-transition metal oxide particles may have a single-crystal structure or a poly-crystal structure in a crystallographic aspect.

For example, the lithium-transition metal oxide particle may include nickel (Ni) and may further include at least one of cobalt (Co) and manganese (Mn).

For example, the lithium-transition metal oxide particle may have a layered structure or a crystal structure represented by Chemical Formula 1 below.

[Chemical Formula 1] LiₓNiₐM_{b}O_{2+z}

In Chemical Formula 1, 0.9≤x≤1.2, 0.6≤a≤0.99, 0.01≤b≤0.4 and -0.5≤z≤0.1. As mentioned above, M may include Co and/or Mn.

In some embodiments, a molar ratio or a concentration x of Ni in Chemical Formula 1 may be 0.8 or more, may exceed 0.8 in some embodiments, and may be greater than 0.98 in some embodiments.

Ni may serve as a transition metal related to power and capacity of the lithium secondary battery. Thus, as described above, a high-Ni composition may be employed to the lithium-transition metal oxide particles, so that a high-power cathode and a high-power lithium secondary battery may be provided.

However, as the content of Ni increases, long-term storage stability and life-span stability of the cathode or secondary battery may be relatively degraded. In example embodiments, life-span stability and capacity retention properties may be improved by Mn while maintaining electrical conductivity by Co.

The chemical structure represented by Chemical Formula 1 indicates a bonding relation included in the layered structure or the crystal structure of the cathode active material and is not intended to exclude other additional elements. For example, M includes Co and/or Mn, and Co and Mn may serve as main active elements of the cathode active material together with Ni. Chemical Formula 1 is provided to express the bonding relation of the main active elements and should be understood as a formula encompassing introduction and substitution of additional elements.

In some embodiments, an auxiliary element may be further included in addition to the main active element to enhance chemical stability of the cathode active material or the layered structure/crystal structure. The auxiliary element may be incorporated into the layered structure/crystal structure to form a bond, and it should be understood that this case is also included within the chemical structure represented by Chemical Formula 1.

The auxiliary elements may include, e.g., at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al which may contribute to the capacity/power activity of the cathode active material together with Co or Mn.

For example, the cathode active material or the lithium-transition metal oxide particle may have a layered structure or a crystal structure represented by Chemical Formula 1-1 below.

[Chemical Formula 1-1] LiₓNiₐM1_{b1}M2_{b2}O_{2+z}

In Chemical Formula 1-1, M1 may include Co and/or Mn. M2 may include the above-described auxiliary element. In Chemical Formula 1-1, 0.9≤x≤1.2, 0.6≤a≤0.99, 0.01≤b1+b2≤0.4, and -0.5≤z≤0.1.

The cathode active material may further include a coating element or a doping element. For example, an element substantially the same as or similar to the above-mentioned auxiliary elements may be used as a coating element or a doping element. For example, the above-mentioned auxiliary elements may be used alone or in combination of two or more therefrom as the coating element or the doping element.

The coating element or the doping element may be present on the surface of the lithium-transition metal oxide particle or penetrate through the surface of the lithium-transition metal oxide particle to be included in the bonding structure represented by Chemical Formula 1 or Chemical Formula 1-1.

A slurry may be prepared by mixing and stirring the above-described cathode active material with a binder, a conductive material and/or a dispersive agent in a solvent. The slurry may be coated on at least one surface of a cathode current collector 105, and then dried and pressed to form the cathode 100.

The cathode current collector 105 may include, for example, stainless steel, nickel, aluminum, titanium, copper or an alloy thereof. For example, the cathode current collector 105 may include aluminum or an aluminum alloy.

The binder may include, for example, an organic-based binder such as vinylidene fluoride-hexafluoropropylene copolymer (PVDF-co-HFP), polyvinylidenefluoride (PVDF), polyacrylonitrile, or polymethylmethacrylate, or an aqueous binder such as styrene-butadiene rubber (SBR) that may be used together with a thickener such as carboxymethyl cellulose (CMC).

For example, a PVDF-based binder may be used as the cathode binder. In this case, an amount of the binder for forming the cathode active material layer 110 may be reduced, and a content of the cathode active material may be relatively increased. Thus, power and capacity of the lithium secondary battery may be improved.

The conductive material may be included to promote an electron transfer between active material particles. For example, the conductive material may include a carbon-based conductive material such as graphite, carbon black, graphene, carbon nanotube, and/or a metal-based conductive material including as tin, tin oxide, titanium oxide, a perovskite material such as LaSrCoO₃ and LaSrMnO₃.

The anode 130 may include an anode current collector 125 and an anode active material layer 120 formed by coating the anode active material on the anode current collector 125.

The anode 130 may be disposed to face the cathode 100 in the lithium secondary battery.

A material capable of intercalating and de-intercalating lithium ions may be used as an anode active material. For example, the anode active material may include a carbon-based material such as a crystalline carbon, an amorphous carbon, a carbon composite, a carbon fiber; a lithium alloy; a silicon-based compound; or tin.

For example, the crystalline carbon may include a graphite-based carbon including at least one selected from the group consisting of natural graphite, artificial graphite, graphitized cokes, graphitized mesocarbon microbead (MCMB) and graphitized mesophase pitch-based carbon fiber (MPCF).

For example, the amorphous carbon may include at least one selected from the group consisting of hard carbon, cokes, mesocarbon microbead (MCMB) and mesophase pitch-based carbon fiber (MPCF).

For example, the lithium alloy may include at least one selected from the group consisting of aluminum, zinc, bismuth, cadmium, antimony, silicon, lead, tin, gallium and indium.

For example, the silicon-based compound may include silicon oxide (SiOx, 0<x<2), or a silicon-carbon complex compound including silicon carbide (SiC).

For example, the anode active material may be mixed and stirred with the above-described binder, the conductive material, the thickener, etc., to form a slurry. The slurry may be coated on at least one surface of the anode current collector 125, and then dried and pressed to from the anode 130.

A separator 140 may be interposed between the anode 100 and the cathode 130.

For example, the separator 140 may include a porous polymer film formed of a polyolefin-based polymer such as an ethylene homopolymer, a propylene homopolymer, an ethylene/butene copolymer, an ethylene/hexene copolymer, or an ethylene/methacrylate copolymer. The separator 140 may also include a nonwoven fabric formed of a high melting point-glass fiber, or a polyethylene terephthalate fiber.

In some embodiments, an area (e.g., a contact area with the separator 140) and/or a volume of the anode 130 may be greater than that of the cathode 100. Accordingly, transfer of lithium ions generated in the cathode 100 to the anode 130 may be facilitated while avoiding precipitation.

For example, an electrode cell is defined by the cathode 100, the anode 130 and the separator 140, and a plurality of the electrode cells may be stacked to form ab electrode assembly 150 in the form of a jelly roll. For example, the electrode assembly 150 may be formed by winding, stacking or folding of the separator 140.

In example embodiments, the electrode assembly 150 may be accommodated in a case 160 together with a non-aqueous electrolyte solution to define a lithium secondary battery.

The non-aqueous electrolyte solution includes a non-aqueous organic solvent including a difluoro organic solvent and a lithium salt.

The term "difluoro-based organic solvent" used herein may refer to a compound containing two fluorine (F) atoms in a single molecule.

A content of the difluoro-based organic solvent is in a range from 2 volume percent (vol%) to 10 vol%, and may be from 3 vol% to 7 vol% in some embodiments, based on a total volume of the non-aqueous organic solvent. In some embodiments, the content of the difluoro-based organic solvent may be, for example, 2 vol% or more, 3 vol% or more, 4 vol% or more, 5 vol% or more, or 6 vol% or more, and may be10 vol% or less, 9 vol% or less, 8 vol% or less, 7 vol% or less, or 6 vol% or less based on the total volume of the non-aqueous organic solvent.

Within this range, a content of fluorine (F) in the non-aqueous electrolyte solution may be sufficiently increased to improve an oxidation resistance of the lithium secondary battery, and a reduction of the capacity retention due to an excessive fluorine content may be prevented. Accordingly, high-temperature storage properties and the capacity retention of the lithium secondary battery may be improved.

If the content of the difluoro-based organic solvent is less than 2 vol% based on the total volume of the non-aqueous organic solvent, the fluorine content of the non-aqueous electrolyte solution may decrease to reduce the oxidation resistance of the lithium secondary battery. Accordingly, the high-temperature storage and capacity properties of the lithium secondary battery may be deteriorated.

If the content of the difluoro-based organic solvent exceeds 10 vol% based on the total volume of the non-aqueous organic solvent, the fluorine content in the non-aqueous electrolyte solution may be excessively increased to deteriorate life-span properties.

The above-described cathode active material including the first cathode active material particle having the single particle shape and the non-aqueous electrolyte solution including the difluoro organic solvent are used together so that a side reaction between the cathode active material and the non-aqueous electrolyte may be further suppressed. Accordingly, the life-span and high-temperature storage properties may be improved.

In some embodiments, the difluoro-based organic solvent may be represented by Chemical Formula 2 below.

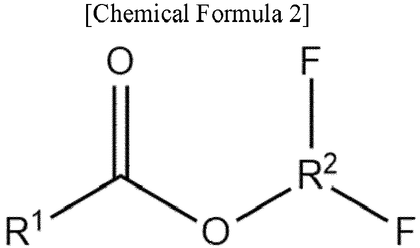

In Chemical Formula 2, R¹ is a hydrocarbon group containing a C₁-C₆ alkyl group or a C₆-C₁₂ aryl group, and R² is a hydrocarbon group containing a C₁-C₆ alkyl group or a C₂-C₆ alkenyl group. In some embodiments, the difluoro-based organic solvent may include 2,2-difluoroethyl acetate (DFEA).

In some embodiments, the non-aqueous organic solvent may further include a monofluoro-based organic solvent.

The term "monofluoro-based organic solvent" used herein may refer to a compound containing one fluorine (F) atom in a single molecule.

In some embodiments, the monofluoro-based organic solvent may be represented by Chemical Formula 3 below.

[Chemical Formula 3] F-R³

In Chemical Formula 3, R³ is a hydrocarbon group containing a C₁-C₆ alkyl group, a C₆-C₁₂ aryl group, a C₅-C₁₂ cycloalkyl group, a C₅-C₁₂ cycloalkenyl group, or a 5 to 7-membered heterocycloalkyl group or a 5 to 7-membered heterocycloalkenyl group.

In some embodiments, each of R¹ to R³ in Chemical Formulae 2 and 3 may be substituted or unsubstituted. For example, at least one of R¹ to R³ in Chemical Formulae 2 and 3 may include a substituent.

For example, the substituent included in R¹ to R³ in Chemical Formulae 2 and 3 may include at least one of selected from the group consisting of a halogen, a C₁-C₆ alkyl group, a C₃-C₆ cycloalkyl group, a C₁-C₆ alkoxy group, a 3 to 7-membered heterocycloalkyl group, a C₆-C₁₂ aryl group, a 5 to 7-membered heteroaryl group, a hydroxyl group (-OH), -NR⁴R⁵ (R⁴ and R⁵ are each independently hydrogen or a C₁-C₆ alkyl group), a nitro group (-NO₂) and a cyano group (-CN).

In some embodiments, the monofluoro-based organic solvent may include fluoroethylene carbonate (FEC).

In some embodiments, a content of the monofluoro-based organic solvent based on the total volume of the non-aqueous organic solvent may be in a range from 2 vol% to 6 vol%. The content of the monofluoro-based organic solvent based on the total volume of the non-aqueous organic solvent may be, for example, 2.5 vol% or more, 3.0 vol% or more, 3.5 vol% or more, or 4.0 vol% or more, and 6 vol% or less, 5.5 vol% or less, 5.0 vol% or less, or 4.5 vol% or less.

Within the above range, the reduction of the capacity retention may be prevented while supplementing the fluorine content in the non-aqueous electrolyte solution. Accordingly, the high-temperature storage and life-span properties of the lithium secondary battery may be further improved.

In some embodiments, the non-aqueous organic solvent may further include a propionate-based organic solvent.

For example, the propionate-based organic solvent may include at least one selected from the group consisting of methyl propionate (MP), ethyl propionate (EP) and propyl propionate (PP)

In some embodiments, the propionate-based organic solvent may include both ethyl propionate and propyl propionate. Accordingly, decomposition of the non-aqueous organic solvent may be reduced under a high voltage of the non-aqueous organic solvent. Thus, driving stability (e.g., the current charging stability) of the lithium secondary battery may be improved.

In some embodiments, a content of the propionate-based organic solvent based on the total volume of the non-aqueous organic solvent may be in a range from 10 vol% to 30 vol%. The content of the propionate-based organic solvent based on the total volume of the non-aqueous organic solvent may be, for example, 10 vol% or more, 12 vol% or more, 15 vol% or more, 17 vol% or more, 20 vol% or more, or 22 vol% or more, and 30 vol% or less, 28 vol% or less, 25 vol% or less, or 23 vol% or less. Within the above range, decomposition of the non-aqueous organic solvent may be sufficiently suppressed and the reduction of the capacity retention may be prevented.

In some embodiments, the non-aqueous organic solvent may further include a non-fluoro solvent.

The term "non-fluoro solvent" may refer to a compound that does not contain fluorine in a molecule.

For example, the non-fluoro organic solvent may include at least one selected from the group consisting of a carbonate-based solvent, an ester-based solvent, an ether-based solvent, a ketone-based solvent, an alcohol-based solvent and an aprotic solvent.

For example, the carbonate-based solvent may include at least one selected from the group consisting of dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC) and butylene carbonate.

For example, the ester-based solvent may include at least one selected from the group consisting of methyl acetate (MA), ethyl acetate (EA), propyl acetate (PA), 1,1-dimethylethyl acetate (DMEA), gamma-butyrolactone (γ-butyrolactone, GBL), decanolide, valerolactone, mevalonolactone and caprolactone.

For example, the ether-based solvent may include at least one selected from the group consisting of dibutyl ether, tetraethylene glycol dimethyl ether (TEGDME), diethylene glycol dimethyl ether (DEGDME), dimethoxyethane, tetrahydrofuran (THF), and 2-methyl tetrahydrofuran.

For example, the ketone-based solvent may include cyclohexanone.

For example, the alcohol-based solvent may include at least one of ethyl alcohol and isopropyl alcohol.

For example, the aprotic solvent may include at least one selected from the group consisting of a nitrile-based solvent, an amide-based solvent (for example, dimethylformamide), a dioxolane-based solvent (for example, 1,3-dioxolane), and a sulfolane-based solvent.

In some embodiments, a content of the non-fluoro solvent based on the total volume of the non-aqueous organic solvent may be in a range from 60 vol% to 80 vol%. Within the above range, a sufficient amount of other organic solvents (for example, the difluoro-based organic solvent, the propionate-based organic solvent, etc.) may be included while preventing the reduction of the capacity retention. Accordingly, the high-temperature storage and the life-span properties of the lithium secondary battery may be improved.

In example embodiments, the lithium salt may be provided as an electrolyte. For example, the lithium salt may be expressed as Li⁺X⁻.

For example, the anion (X⁻) of the lithium salt may include F⁻, Cl⁻, Br⁻, I⁻, NO₃⁻, N(CN)₂⁻, BF₄⁻, ClO₄⁻, PF₆⁻, SbF₆⁻, AsF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF5)₃C; (CF₃SO₂)₃C⁻, CF₃(CF₂)₇SO₃⁻, CF₃CO₂⁻, CH₃CO₂⁻, SCN⁻, (CF₃CF₂SO₂)₂N⁻, PO₂F₂⁻. These may be used alone or in a combination thereof.

In some embodiments, the lithium salt may include at least one of lithium tetrafluoroborate (LiBF₄), lithium hexafluorophosphate (LiPF₆) and lithium difluorophosphate (LiPO₂F₂). In this case, a thermal stability of a film formed on the surface of an electrode may be improved. Accordingly, ionic conductivity and electrode protective properties of the non-aqueous electrolyte solution may be improved.

In some embodiments, the lithium salt may be included in a concentration from about 0.01 M to about 5 M with respect to the non-aqueous organic solvent, and from about 0.01 M to about 2 M in some embodiments. Within this range, the transfer of lithium ions and/or electrons may be promoted during charging and discharging of the lithium secondary battery, so that capacity properties may be improved.

In some embodiments, the non-aqueous electrolyte solution may further include an additive containing a boron-based compound.

For example, the boron-based compound may include at least one of lithium bis(oxalate) borate (LiBOB), tris(trimethylsilyl) borate (TMSB) and lithium difluorooxalate borate (LiFOB).

The above-described boron-based compound may be included as the additive so that a side reaction between the difluoro-based organic solvent and the anode may be suppressed. Accordingly, deterioration of the storage and life-span properties of the anode may be prevented while using the difluoro-based organic solvent.

In some embodiments, a content of the additive based on the total weight of the non-aqueous electrolyte solution may be in a range from 0.1 wt % to 1.0 wt %, e.g., from 0.3 wt % to 0.7 wt %. Within this range, an excessive increase of a battery resistance may be prevented while sufficiently improving the high temperature storage and life-span properties. Accordingly, the life-span and power properties of the lithium secondary battery may be improved.

In some embodiments, the non-aqueous electrolyte solution may further include an auxiliary additive including at least one selected from the group consisting of an alkyl sultone-based compound and an alkenyl sultone-based compound.

For example, the alkyl sultone-based compound may include at least one selected from the group consisting of 1,3-propane sultone (PS) and 1,4-butane sultone.

For example, the alkenyl sultone-based compound may include at least one selected from the group consisting of ethene sultone, 1,3-propene sultone (PRS), 1,4-butene sultone and 1-methyl-1,3-propene sultone.

The auxiliary additive may further include, for example, an anhydride-based compound such as succinic anhydride and maleic anhydride, and/or a nitrile-based compound such as glutamitrile, succinic acid nitrile and adiponitrile. These may be added alone or in a combination thereof, in addition to the above-mentioned sultone-based compound.

In some embodiments, the auxiliary additive may further include at least one of polyethylene sulfide (PES), vinylene carbonate (VC) and vinylethylene carbonate (VEC).

In some embodiments, a content of the auxiliary additive based on the total weight of the non-aqueous electrolyte solution may be in a range from 0.8 wt% to 1.5 wt%. Within the above range, the side reaction of the above-described additive may be further suppressed while suppressing an excessive increase of the battery resistance. Accordingly, the reduction of capacity may be suppressed while maintaining or improving the effect of enhancing the life-span properties of the secondary battery from the above-described difluoro-based organic solvent.

As illustrated in FIG. 1, electrode tabs (anode tab and cathode tab) may protrude from the cathode current collector 105 and the anode current collector 125 included in each electrode cell to extend to one side of the case 160. The electrode tabs may be fused together with the one side of the case 160 to form electrode leads (a cathode lead 107 and an anode lead 127) extending or exposed to an outside of the case 160.

The lithium secondary battery may be fabricated into a cylindrical shape using a can, a prismatic shape, a pouch shape, a coin shape, etc.

Hereinafter, examples are presented to more concretely describe the present disclosure.

### Example 1

### (1) Preparation of Cathode Active Material

A mixed solution was prepared by mixing NiSO₄, CoSO₄ and MnSO₄ in a ratio of 0.8:0.1:0.1 using distilled water from which internal dissolved oxygen was removed by bubbling with N₂ for 24 hours. The prepared mixed solution was put into a reactor at 50 °C, and NaOH and NH₃H₂O were added as a precipitating agent and a chelating agent, respectively.

Thereafter, a co-precipitation reaction was performed for 72 hours to obtain Ni_{0.8}Co_{0.1}Mn_{0.1}(OH)₂ as a transition metal precursor. The obtained precursor was dried at 100 °C for 12 hours and then redried at 120 °C for 10 hours.

Lithium hydroxide and the transition metal precursor were added to a dry highspeed mixer in a molar ratio of 1.03:1 and mixed uniformly for 20 minutes. The mixture was put into a firing furnace and heated up to 950 °C at a ramping rate of 2 °C/min, and left for 12 hours while maintaining the temperature at 950 °C.

Oxygen was continuously passed through at a flow rate of 10 mL/min during the temperature elevation and maintenance. After the firing, natural cooling was performed to room temperature, followed by pulverization and classification to prepare first cathode active material particles having a single particle form and a composition of LiNi_{0.8}Co_{0.1}Mn_{0.1}O₂. The cooling was performed in a system maintaining a room temperature until the mixture's temperature reached a room temperature.

A cathode active material was prepared by mixing the prepared first cathode active material particles with second cathode active material particles (composition: LiNi_{0.8}Co_{0.1}Mn_{0.1}O₂) having a secondary particle form.

A content of the first cathode active material particles based on a total weight of the cathode active material was adjusted to be 30 wt%.

### (2) Preparation of Non-aqueous Electrolyte Solution

A 1.0 M LiPF6 solution was prepared using a mixed non-aqueous organic solvent of PC/EMC/DEC/ethyl propionate (EP)/propyl propionate (PP)/FEC/DFEA (16/30/20/10/10/4/10; volume ratio). PC, EMC and DEC were used as a non-fluoro solvent, FEC was used as a monofluoro-based organic solvent, and DFEA was used as a difluoro-based organic solvent.

Lithium bisoxalato borate (LiBOB) was added as an additive and mixed with the solution in an amount of 0.5 wt% based on the total weight of the non-aqueous electrolyte solution.

The non-aqueous electrolyte solution was prepared by adding and mixing 1,3-propane sultone (PS) and 1,3-propene sultone (PRS) as an auxiliary additive to the solution. PS was added in an amount of 1.0 wt% by weight based on the total weight of the non-aqueous electrolyte solution, and PRS was added in an amount of 0.3 wt% based on the total weight of the non-aqueous electrolyte solution (total 1.3 wt% of the auxiliary additive).

### (3) Fabrication of Lithium Secondary Battery

The above-prepared cathode active material, carbon black as a conductive material and polyvinylidene fluoride (PVDF) as a binder were mixed in a weight ratio of 92:5:3 to prepare a slurry. The slurry was uniformly coated on an aluminum foil having a thickness of 15 µm, vacuum dried and pressed at 130 °C to prepare a cathode for a lithium secondary battery.

95 wt% of natural graphite as an anode active material, 1 wt% of Super-P as a conductive material, 2 wt% of styrene-butadiene rubber (SBR) as a binder, and 2 wt% of carboxymethyl cellulose (CMC) as a thickener was mixed to prepare an anode slurry. The anode slurry was uniformly coated on a copper foil having a thickness of 15 µm, dried and pressed to form an anode.

The cathode and the anode prepared as described above were each notched by a predetermined size, and stacked with a separator (polyethylene, thickness: 20 µm) interposed therebetween to form an electrode cell. Each tab portion of the cathode and the anode was welded.

The welded assembly of the cathode/separator/anode was inserted in a pouch, and three sides (sealing portion) of the pouch except for an electrolyte injection side were sealed. The tab portions were also included in the sealing portions. The electrolyte solution as prepared in the above (2) was injected through the electrolyte injection side, and then the electrolyte injection side was also sealed. Impregnation was performed for 12 hours to obtain a lithium secondary battery.

### Example 2

A cathode active material, a non-aqueous electrolyte solution and a lithium secondary battery were prepared by the same methods as those in Example 1, except that a mixed solvent of PC/EMC/DEC/EP/PA/FEC/DFEA (16/30/20/10/10/4/10; volume ratio) was used as the non-aqueous organic solvent

### Example 3

A cathode active material, a non-aqueous electrolyte solution and a lithium secondary battery were prepared by the same methods as those in Example 1, except that a mixed solvent of PC/EMC/DEC/EP/PP/FEC/DFEA (16/30/20/10/13/4/7; volume ratio) was used as the non-aqueous organic solvent.

### Example 4

A cathode active material, a non-aqueous electrolyte solution and a lithium secondary battery were prepared by the same methods as those in Example 1, except that a mixed solvent of PC/EMC/DEC/EP/PP/FEC/DFEA (16/30/20/10/15/4/5; volume ratio) was used as the non-aqueous organic solvent.

### Example 5

A cathode active material, a non-aqueous electrolyte solution and a lithium secondary battery were prepared by the same methods as those in Example 1, except that a mixed solvent of PC/EMC/DEC/EP/PP/FEC/DFEA (16/30/20/10/17/4/3; volume ratio) was used as the non-aqueous organic solvent.

### Examples 6 to 8

A cathode active material, a non-aqueous electrolyte solution and a lithium secondary battery were prepared by the same methods as those in Example 3, except that the content of the first cathode active material particles based on the total weight of the cathode active material was adjusted as described in Table 1 below.

### Example 9

A cathode active material, a non-aqueous electrolyte solution and a lithium secondary battery were prepared by the same methods as those in Example 1, except that a mixed solvent of PC/EMC/DEC/EP/PP/FEC/DFEA (18.5/30/20/10/13/1.5/7; volume ratio) was used as the non-aqueous organic solvent.

### Example 10

A cathode active material, a non-aqueous electrolyte solution and a lithium secondary battery were prepared by the same methods as those in Example 1, except that a mixed solvent of PC/EMC/DEC/EP/PP/FEC/DFEA (13.5/30/20/10/13/6.5/7; volume ratio) was used as the non-aqueous organic solvent.

### Example 11

A cathode active material, a non-aqueous electrolyte solution and a lithium secondary battery were prepared by the same methods as those in Example 1, except that a mixed solvent of PC/EMC/DEC/EP/PP/FEC/DFEA (21/30/30/3/5/4/7; volume ratio) was used as the non-aqueous organic solvent.

### Example 12

A cathode active material, a non-aqueous electrolyte solution and a lithium secondary battery were prepared by the same methods as those in Example 1, except that a mixed solvent of PC/EMC/DEC/EP/PP/FEC/DFEA (16/22/20/14/17/4/7; volume ratio) was used as the non-aqueous organic solvent.

### Example 13

A cathode active material, a non-aqueous electrolyte solution and a lithium secondary battery were prepared by the same methods as those in Example 3, except that LiBOB was not added as the additive.

### Example 14

A cathode active material, a non-aqueous electrolyte solution and a lithium secondary battery were prepared by the same methods as those in Example 3, except that LiBOB was added as the additive in an amount of 1.1 wt% based on the total weight of the non-aqueous electrolyte solution.

### Example 15

A cathode active material, a non-aqueous electrolyte solution and a lithium secondary battery were prepared by the same methods as those in Example 3, except that 1,3-propane sultone (PS) was added in an amount of 0.5 wt% based on the total weight of the non-aqueous electrolyte solution, and 1,3-propene sultone (PRS) was added in an amount of 0.2 wt% based on the total weight of the non-aqueous electrolyte solution (total 0.7 wt% of the auxiliary additives) as the auxiliary additive.

### Example 16

A cathode active material, a non-aqueous electrolyte solution and a lithium secondary battery were prepared by the same methods as those in Example 3, except that PS was added in an amount of 1.3 wt% based on the total weight of the non-aqueous electrolyte solution, and PRS was added in an amount of 0.3 wt% based on the total weight of the non-aqueous electrolyte solution (total 1.6 wt% of the auxiliary additives) as the auxiliary additive.

### Comparative Example 1

A cathode active material, a non-aqueous electrolyte solution and a lithium secondary battery were prepared by the same methods as those in Example 1, except that a mixed solvent of EC/EMC (20/80; volume ratio) was used as the non-aqueous organic solvent.

### Comparative Example 2

A cathode active material, a non-aqueous electrolyte solution and a lithium secondary battery were prepared by the same methods as those in Example 1, except that a mixed solvent of PC/EC/EMC/DEC/EP/FEC/DFEA (8/8/30/20/10/4/20; volume ratio) was used as the non-aqueous organic solvent.

### Comparative Example 3

A cathode active material, a non-aqueous electrolyte solution and a lithium secondary battery were prepared by the same methods as those in Example 1, except that a mixed solvent of PC/EC/EMC/DMC/EP/FEC/DFEA (8/8/30/20/10/4/20; volume ratio) was used as the non-aqueous organic solvent.

### Comparative Example 4

A cathode active material, a non-aqueous electrolyte solution and a lithium secondary battery were prepared by the same methods as those in Example 1, except that a mixed solvent of PC/EC/EMC/EP/FEC/DFEA (8/8/50/10/4/20; volume ratio) was used as the non-aqueous organic solvent.

### Comparative Example 5

A cathode active material, a non-aqueous electrolyte solution and a lithium secondary battery were prepared by the same methods as those in Example 1, except that a mixed solvent of PC/EMC/DEC/EP/FEC/DFEA (16/30/20/10/4/20; volume ratio) was used as the non-aqueous organic solvent.

### Comparative Example 6

A cathode active material, a non-aqueous electrolyte solution and a lithium secondary battery were prepared by the same methods as those in Example 1, except that a mixed solvent of PC/EMC/DEC/EP/PP/FEC/DFEA (22/30/20/10/13/4/1; volume ratio) was used as the non-aqueous organic solvent.

### Comparative Example 7

A cathode active material, a non-aqueous electrolyte solution and a lithium secondary battery were prepared by the same methods as those in Example 1, except that a mixed solvent of PC/EMC/DEC/EP/PP/FEC/DFEA (15/26/20/10/13/4/12; volume ratio) was used as the non-aqueous organic solvent.

### Comparative Example 8

A cathode active material, a non-aqueous electrolyte solution and a lithium secondary battery were prepared by the same methods as those in Example 3, except that the second cathode active material particles were only used as the cathode active material.

In the above-described Examples and Comparative Examples, the contents of the first cathode active material particles in the cathode active material, the contents of the difluoro-based organic solvent based on the total volume of the non-aqueous organic solvent, the contents of the monofluoro-based organic solvent based on the total volume of the non-aqueous organic solvent, the contents of the propionate-based organic solvent based on the total volume of the non-aqueous organic solvent, the contents of the additive based on the total weight of the non-aqueous electrolyte solution, and the contents of the auxiliary additive based on the total weight of the non-aqueous electrolyte solution are shown in Tables 1 and 2 below.

**[Table 1]**

| No. | content of first cathode active material particles (wt%) | content of difluoro-based organic solvent (vol%) | content of monofluoro-based organic solvent (vol%) | content of propionate-based organic solvent (vol%) |
|---|---|---|---|---|
| Example 1 | 30 | 10 | 4 | 20 |
| Example 2 | 30 | 10 | 4 | 10 |
| Example 3 | 30 | 7 | 4 | 23 |
| Example 4 | 30 | 5 | 4 | 25 |
| Example 5 | 30 | 3 | 4 | 27 |
| Example 6 | 15 | 7 | 4 | 23 |
| Example 7 | 8 | 7 | 4 | 23 |
| Example 8 | 43 | 7 | 4 | 23 |
| Example 9 | 30 | 7 | 1.5 | 23 |
| Example 10 | 30 | 7 | 6.5 | 23 |
| Example 11 | 30 | 7 | 4 | 8 |
| Example 12 | 30 | 7 | 4 | 31 |
| Example 13 | 30 | 7 | 4 | 23 |
| Example 14 | 30 | 7 | 4 | 23 |
| Example 15 | 30 | 7 | 4 | 23 |
| Example 16 | 30 | 7 | 4 | 23 |
| Comparative Example 1 | 30 | 0 | 0 | 0 |
| Comparative Example 2 | 30 | 20 | 4 | 10 |
| Comparative Example 3 | 30 | 20 | 4 | 10 |
| Comparative Example 4 | 30 | 20 | 4 | 10 |
| Comparative Example 5 | 30 | 20 | 4 | 10 |
| Comparative Example 6 | 30 | 1 | 4 | 23 |
| Comparative Example 7 | 30 | 12 | 4 | 23 |
| Comparative Example 8 | 0 | 7 | 4 | 23 |

**[Table 2]**

| No. | additive content (wt%) | auxiliary additive content (wt%) |
|---|---|---|
| Example 1 | 0.5 | 1.3 |
| Example 2 | 0.5 | 1.3 |
| Example 3 | 0.5 | 1.3 |
| Example 4 | 0.5 | 1.3 |
| Example 5 | 0.5 | 1.3 |
| Example 6 | 0.5 | 1.3 |
| Example 7 | 0.5 | 1.3 |
| Example 8 | 0.5 | 1.3 |
| Example 9 | 0.5 | 1.3 |
| Example 10 | 0.5 | 1.3 |
| Example 11 | 0.5 | 1.3 |
| Example 12 | 0.5 | 1.3 |
| Example 13 | 0 | 1.3 |
| Example 14 | 1.1 | 1.3 |
| Example 15 | 0.5 | 0.7 |
| Example 16 | 0.5 | 1.6 |
| Comparative | 0.5 | 1.3 |
| Example 1 | | |
| Comparative Example 2 | 0.5 | 1.3 |
| Comparative Example 3 | 0.5 | 1.3 |
| Comparative Example 4 | 0.5 | 1.3 |
| Comparative Example 5 | 0.5 | 1.3 |
| Comparative Example 6 | 0.5 | 1.3 |
| Comparative Example 7 | 0.5 | 1.3 |
| Comparative Example 8 | 0.5 | 1.3 |

### Experimental Example

### (1) Evaluation on electrochemical stability: LSV (Linear Sweep Voltammetry) analysis

A voltage was swept at a constant rate in the lithium secondary battery fabricated according to each of Examples and Comparative Examples, and the voltage at a point where a current generation was started by a decomposition of the non-aqueous electrolyte solution was measured. Specifically, the measurement was performed at a scan rate of 0.05 mV/s to 1.0 mV/s in a voltage range of 3 V to 7 V using a linear sweep voltammetry (LSV) measurement device made by Solartron Metrology. When measuring the LSV, a platinum electrode was used as a working electrode, and a lithium metal was used as a reference electrode and a counter electrode.

For example, a high electrolyte decomposition voltage indicate that the secondary battery is electrochemically stable.

### (2) Evaluation on initial performance

### 1) Measurement of initial capacity

Charge (CC/CV 1/3C 4.2V 0.05C CUT-OFF) and discharge (CC 1/3C 2.5V CUT-OFF) were performed for the lithium secondary battery according to the above-described Examples and Comparative Examples, and then an initial discharge capacity was measured.

### 2) Measurement of Discharge DCIR (direct current internal resistance)

A C-rate (charging rate) was sequentially increased in an order of 0.2C, 0.5C, 1.0C, 1.5C, 2.0C, 2.5 C, and to 3.0 at an SOC (State of Charge) 60% of each lithium secondary battery of Examples and Comparative Examples. An end point of a voltage when charging and discharging proceeded for 10 seconds at each corresponding C-rate was plotted as a linear equation, and a slope of the linear equation was adopted as a DCIR (direct current internal resistance).

### (3) Evaluation on high-temperature life-span property: Measurement of gas venting period (75 °C)

The lithium secondary battery according to each of Examples and Comparative Examples was charged up to SOC100 (CC/CV 1C 4.3V 0.1C CUT-OFF), and left in a chamber at 75 °C. Thereafter, a period when a gas vents firstly was measured and was evaluated as a gas venting period.

### (4) Evaluation on high temperature storage property (60 °C)

The lithium secondary batteries according to the above-described Examples and Comparative Examples were left in a chamber at 60 °C for 120 days, and then the following evaluations were performed.

### 1) Measurement of capacity retention (60 °C)

The lithium secondary battery was discharged (CC 1/3C 2.5V CUT-OFF) to measure a discharge capacity. A capacity retention was calculated as a percentage by dividing the discharge capacity by the initial capacity measured in Experimental Example (2) 1).

The discharge capacity measurement method was performed in the same manner as Experimental Example (2) 1).

### 2) Measurement of discharge DCIR

A discharge DCIR was measured by the same method as that in Experimental Example (2) 2).

The evaluation results are shown in Tables 3 and 4 below.

**[Table 3]**

| No. | LSV (V) | initial performance | |
|---|---|---|---|
| | | initial capacity (Ah) | DCIR (mΩ) |
| Example 1 | 5.93 | 81.8 | 1.44 |
| Example 2 | 5.95 | 81.9 | 1.42 |
| Example 3 | 5.97 | 81.7 | 1.44 |
| Example 4 | 5.94 | 81.8 | 1.45 |
| Example 5 | 5.89 | 81.9 | 1.45 |
| Example 6 | 5.80 | 82.3 | 1.48 |
| Example 7 | 5.67 | 83.0 | 1.38 |
| Example 8 | 6.06 | 80.2 | 1.44 |
| Example 9 | 5.94 | 81.8 | 1.41 |
| Example 10 | 5.96 | 82.1 | 1.42 |
| Example 11 | 5.95 | 82.0 | 1.42 |
| Example 12 | 5.99 | 81.5 | 1.50 |
| Example 13 | 5.91 | 82.2 | 1.34 |
| Example 14 | 5.93 | 80.1 | 1.54 |
| Example 15 | 5.95 | 82.7 | 1.35 |
| Example 16 | 5.94 | 80.1 | 1.57 |
| Comparative Example 1 | 5.34 | 81.4 | 1.52 |
| Comparative Example 2 | 5.59 | 81.7 | 1.45 |
| Comparative Example 3 | 5.56 | 82.1 | 1.35 |
| Comparative Example 4 | 5.57 | 82.0 | 1.41 |
| Comparative Example 5 | 5.54 | 81.7 | 1.46 |
| Comparative Example 6 | 5.41 | 78.3 | 4.50 |
| Comparative Example 7 | 5.88 | 81.0 | 4.51 |
| Comparative Example 8 | 5.21 | 83.1 | 4.47 |

**[Table 4]**

| No. | high temperature life-span property | high temperature storage property (60 °C,120 days) | |
|---|---|---|---|
| | gas venting period (75 °C) (days) | capacity retention (%) | DCIR (mΩ) |
| Example 1 | 51 | 78.2 | 1.79 |
| Example 2 | 54 | 77.9 | 1.85 |
| Example 3 | 48 | 78.1 | 1.80 |
| Example 4 | 51 | 77.4 | 1.81 |
| Example 5 | 52 | 77.8 | 1.82 |
| Example 6 | 51 | 77.5 | 1.78 |
| Example 7 | 50 | 77.2 | 1.77 |
| Example 8 | 57 | 78.6 | 1.82 |
| Example 9 | 51 | 77.3 | 1.78 |
| Example 10 | 51 | 77.3 | 1.78 |
| Example 11 | 52 | 77.4 | 1.77 |
| Example 12 | 50 | 77.5 | 1.79 |
| Example 13 | 49 | 77.3 | 1.76 |
| Example 14 | 51 | 77.4 | 1.77 |
| Example 15 | 52 | 77.6 | 1.78 |
| Example 16 | 56 | 78.4 | 1.83 |
| Comparative Example 1 | 8 | 74.2 | 1.99 |
| Comparative Example 2 | 27 | 77.7 | 1.89 |
| Comparative Example 3 | 14 | 77.3 | 1.77 |
| Comparative Example 4 | 25 | 77.9 | 1.82 |
| Comparative Example 5 | 52 | 77.2 | 1.92 |
| Comparative Example 6 | 27 | 75.3 | 1.90 |
| Comparative Example 7 | 25 | 75.4 | 1.91 |
| Comparative Example 8 | 30 | 75.6 | 1.90 |

Referring to Tables 3 and 4, in Examples where the cathode active material including the first cathode active material particles having the single particle form and the difluoro-based organic solvent in an amount of 2 wt% to 10 wt% based on the total volume of the non-aqueous organic solvent were used together, improved initial capacity, high-temperature life-span and high-temperature storage properties were obtained compared to those from Comparative Examples.

In Example 7, the content of the first cathode active material particles based on the total weight of the cathode active material was less than 10 wt%, and the high-temperature capacity retention and the high-temperature storage properties were lowered relatively to those from other Examples.

In Example 8 where the content of the first cathode active material particles having the single particle form based on the total weight of the cathode active material exceeded 40 wt%, the initial capacity was lowered relatively to those from other Examples.

In Example 9 where the content of the monofluoro-based organic solvent was less than 2 vol% based on the total volume of the non-aqueous organic solvent, the fluorine content in the electrolyte solution was reduced compared to those from other Examples and the high-temperature capacity retention was relatively lowered.

In Example 10 where the content of the monofluoro-based organic solvent based on the total volume of the non-aqueous organic solvent exceeded 6 vol%, and the high-temperature capacity retention was lowered relatively to those from other Examples.

In Example 11 where the content of the propionate-based organic solvent based on the total volume of the non-aqueous organic solvent was less than 10 vol%, the decomposition of the non-aqueous organic solvent was not sufficiently suppressed and the high-temperature life-span and storage properties were lowered relatively to those from other Examples.

In Example 12, the content of the propionate-based organic solvent based on the total volume of the non-aqueous organic solvent exceeded 30 vol%, and the high-temperature capacity retention was lowered relatively to those from other Examples.

In Example 13 where the additive containing the boron-based compound was not added to the non-aqueous electrolyte solution, the high-temperature life-span and storage properties were lowered relatively to those from other Examples.

In Example 14 where the content of the additive based on the total weight of the non-aqueous electrolyte solution exceeded 1.0 wt%, the resistance of the lithium secondary battery was increased and the initial capacity was decreased relatively to those from other Examples.

In Example 15 where the total content of the auxiliary additive based on the total weight of the non-aqueous electrolyte solution was less than 0.8 wt%, the high-temperature life-span and storage properties were lowered relatively to those from other Examples.

In Example 16 where the total content of the auxiliary additive based on the total weight of the non-aqueous electrolyte solution exceeded 1.5 wt%, the resistance of the lithium secondary battery was increased and the initial capacity was lowered relatively to those from other Examples.

## Claims

1. A lithium secondary battery, comprising:
a cathode including a cathode current collector and a cathode active material disposed on at least one surface of the cathode current collector, the cathode active material comprising first cathode active material particles having a shape of a single particle;
an anode facing the cathode; and
a non-aqueous electrolyte solution having a lithium salt and a non-aqueous organic solvent that comprises a difluoro-based organic solvent,
wherein a content of the difluoro-based organic solvent is in a range from 2 vol% to 10 vol% based on a total volume of the non-aqueous organic solvent.

2. The lithium secondary battery of claim 1, wherein the content of the difluoro-based organic solvent is in a range from 3 vol% to 7 vol% based on the total volume of the non-aqueous organic solvent.

3. The lithium secondary battery of claim 1 or claim 2, wherein the cathode active material further comprises second cathode active material particles having a shape of a secondary particle.

4. The lithium secondary battery of any one of claims 1 to 3, wherein a content of the first cathode active material particles is in a range from 10 wt% to 40 wt% based on a total weight of the cathode active material.

5. The lithium secondary battery of any one of claims 1 to 4, wherein the difluoro-based organic solvent is represented by Chemical Formula 2 below: 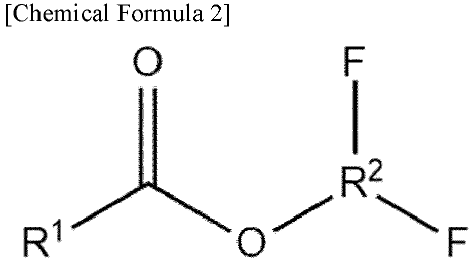 wherein, in Chemical Formula 2, R¹ is a hydrocarbon group containing a C₁-C₆ alkyl group or a C₆-C₁₂ aryl group, and R² is a hydrocarbon group containing a C₁-C₆ alkyl group or a C₂-C₆ alkenyl group.

6. The lithium secondary battery of any one of claims 1 to 5, wherein the difluoro-based organic solvent comprises 2,2-difluoroethyl acetate.

7. The lithium secondary battery of any one of claims 1 to 6, wherein the non-aqueous organic solvent further comprises a monofluoro-based organic solvent, and a content of the monofluoro-based organic solvent is in a range from 2 vol% to 6 vol% based on the total volume of the non-aqueous organic solvent.

8. The lithium secondary battery of claim 7, wherein the monofluoro-based organic solvent is represented by Chemical Formula 3 below:
[Chemical Formula 3] F-R³
wherein, in Chemical Formula 3, R³ is a hydrocarbon group containing a C₁-C₆ alkyl group, a C₆-C₁₂ aryl group, a C₅-C₁₂ cycloalkyl group, a C₅-C₁₂ cycloalkenyl group, a 5 to 7-membered heterocycloalkyl group or a 5 to 7-membered heterocycloalkenyl group.

9. The lithium secondary battery of any one of claims 1 to 8, wherein the non-aqueous organic solvent further comprises a propionate-based organic solvent including at least one selected from the group consisting of methyl propionate (MP), ethyl propionate (EP) and propyl propionate (PP),
wherein a content of the propionate-based organic solvent is in a range from 10 vol% to 30 vol% based on the total volume of the non-aqueous organic solvent.

10. The lithium secondary battery of any one of claims 1 to 9, wherein the non-aqueous organic solvent further comprises a non-fluoro solvent including at least one selected from the group consisting of a carbonate-based solvent, an ester-based solvent, an ether-based solvent, a ketone-based solvent, an alcohol-based solvent and an aprotic solvent.

11. The lithium secondary battery of claim 10, wherein a content of the non-fluoro solvent is in a range from 60 vol% to 80 vol% based on the total volume of the non-aqueous organic solvent.

12. The lithium secondary battery of any one of claims 1 to 11, wherein the non-aqueous electrolyte solution further comprises an additive having a boron-based compound, and a content of the additive is in a range from 0.1 wt% to 1.0 wt% based on a total weight of the non-aqueous electrolyte solution.

13. The lithium secondary battery of claim 12, wherein the boron-based compound includes at least one selected from the group consisting of lithium bis(oxalate) borate (LiBOB), tris(trimethylsilyl) borate (TMSB) and lithium difluoro(oxalato) borate (LiFOB).

14. The lithium secondary battery of any one of claims 1 to 13, wherein the non-aqueous electrolyte further comprises an auxiliary additive including at least one selected from the group consisting of an alkyl sultone-based compound and an alkenyl sultone-based compound, and
a content of the auxiliary additive is in a range from 0.8 wt% to 1.5 wt% based on a total weight of the non-aqueous electrolyte solution.

15. The lithium secondary battery of any one of claims 1 to 14, wherein the lithium salt includes at least one of lithium tetrafluoroborate (LiBF₄), lithium hexafluorophosphate (LiPF₆) and lithium difluorophosphate (LiPO₂F₂).
